# EUROPEAN PATENT APPLICATION

(11) **EP 4 166 526 A1**
(43) Date of publication of application: **19.04.2023**
(21) Application number: 21202918.5
(22) Date of filing: 15.10.2021
(51) Int. Cl.: C05D 1/02, C05G 5/23, C05B 17/00

(54) **METHOD FOR PRODUCING A POTASSIUM-CONTAINING FERTILIZER WITH A LOW CONTENT OF WATER-INSOLUBLE MATERIAL**

(71) Applicant: Yara International ASA, 0277 Oslo (NO)
(72) Inventor: Wieringa, Guido, 3133 CA Vlaardingen (NL); Camargo Horta de Macedo, Alexandre, York, YO42 1DN (GB)
(74) Representative: De Clercq & Partners

(57) **Abstract**

The present disclosure provides a method for producing a solid, particulate composition comprising from 0 to 2.0 weight% of water-insoluble material, the method comprising the steps of: a) mixing potassium chloride and sulphuric acid, thereby producing a composition comprising potassium sulphate and sulphuric acid; b) adding magnesium oxide to the composition obtained in step a), thereby neutralizing the sulphuric acid comprised in the composition obtained in step a); c) adding the composition obtained in step b) to a composition comprising nitrogen (N) and/or phosphorus (P); d) solidifying the composition obtained in step c), thereby producing a solid, particulate composition comprising potassium, nitrogen and/or phosphorus.

Also disclosed is the use of a composition comprising potassium sulphate and magnesium sulphate to produce a solid, particulate composition and its use as a fertilizer, in particular in fertigation.

## Description

### Field of the invention

The present invention is related to the field of fertilizer production, in particular the production of NPK fertilizers with a low content of water-insoluble material.

### Background of the invention

Nitrogen (N), phosphorus (P) and potassium (K) are the three primary nutrients required by most crops to grow. Soils contain naturally various amounts of these nutrients, but in order to achieve optimal growth and yield, farmers often add sources of these nutrients. In addition, crops may also require secondary nutrients (calcium, magnesium and sulphur) and micronutrients (boron, copper, iron, molybdenum, manganese and zinc)

Fertilizer products, in particular solid fertilizer products, such as prills or granules, have been used for centuries. Solid fertilizer may comprise one or more nutrients, and fertilizer products containing more than one nutrient have the advantage that they reduce the number of applications to be done for the farmer by providing several nutrients to the crops in a single application.
A NPK fertilizer refers to a product containing all primary nutrients: N, P and K. It exists in different ways and different raw materials can be used to produce these fertilizers. NPK fertilizers are often named in the form of X/Y/Z, wherein X, respectively Y, and Z, is the weight% of N (expressed as nitrogen), respectively P (expressed as P₂O₅), and K (expressed as K₂O).

An important characteristic of solid fertilizers is the amount of water-insoluble material that they contain. It may be an advantage to produce a NPK product with a very low amount, such as less than 1.0 weight%, of water-insoluble material, as such a product may be used in fertigation, wherein the fertilizer product is first dissolved in water and distributed to the crops via the irrigation system. This fertilization method is gaining popularity and interest as it reduces water consumption and allows a very precise fertilizer application. Fertigation requires a fertilizer product that has a low amount of water-insoluble material, as water-insoluble material can clog irrigation lines.

However, fertilizer products with a low amount of water-insoluble material, in particular NPK fertilizer products, are not easy to obtain, in particular where the production method uses potassium sulphate (SOP) as potassium source.

There is a need to provide a new production method that provides a fertilizer product with a low amount of water-insoluble material.

### Summary of the invention

It was found out that an important source of water-insoluble material in a product, in particular a fertilizer product, using SOP as potassium source was contained in the SOP, in particular wherein the SOP had been prepared by the Mannheim process. In the Mannheim process for SOP production, sulphuric acid is reacted with potassium chloride to yield potassium sulphate. This reaction uses an excess of sulphuric acid to ensure the full conversion of the potassium chloride. However, if the resulting SOP has a pH too low, in particular below pH =3, the subsequent production steps to obtain a fertilizer product may face issues, such as a very high viscosity and/or higher safety risks.

In order to alleviate one or more of these issues, it is important to raise the pH of the SOP to at least 3.5 (measured as 10 weight% aqueous solution). Neutralizing the excess sulphuric acid, and raising the pH of the SOP is conventionally done by adding calcium oxide. However, when calcium oxide reacts with sulphuric acid, calcium sulphate is formed and calcium sulphate has a very low solubility in water, and this increases the amount of water-insoluble material in the SOP, and therefore in the final product.

It was found that it was possible to replace the calcium oxide used to neutralize sulphuric acid with another compound, namely magnesium oxide. Magnesium oxide is also able to react with sulphuric acid and raises the pH of the SOP. An advantage of using magnesium oxide is that it is converted into magnesium sulphate during the neutralization step. Magnesium sulphate has a very good water solubility and does not increase the content of water-insoluble material of the final product.

In a first aspect, the present disclosure provides a method for producing a solid, particulate composition comprising from 0 to 2.0 weight% of water-insoluble material, the method comprising the steps of: a) mixing potassium chloride and sulphuric acid, thereby producing a composition comprising potassium sulphate and sulphuric acid; b) adding magnesium oxide to the composition obtained in step a), thereby neutralizing the sulphuric acid comprised in the composition obtained in step a); c) adding the composition obtained in step b) to a composition comprising nitrogen (N) and/or phosphorus (P); d) solidifying the composition obtained in step c), thereby producing a solid, particulate composition.

In another aspect, the present disclosure provides the use of a composition comprising potassium sulphate and magnesium sulphate to produce a solid, particulate composition; in particular a solid, particulate NPK composition. Also the use of the solid, particulate composition obtained by a method according to any of the disclosed embodiments, as a fertilizer; preferably in fertigation, is disclosed.

### Detailed description of the invention

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

All references cited in this description are hereby deemed to be incorporated in their entirety by way of reference.

As used herein, the following terms have the following meanings:
"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20 % or less, in particular +/-10 % or less, more in particular +/-5 % or less, even more in particular +/-1 % or less, and still more in particular +/-0.1 % or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The term "solid, particulate composition" refers to a composition consisting of solid particles. All the solid particles of the composition have the same chemical composition.

In a first aspect, the present disclosure provides a method for producing a solid, particulate composition comprising from 0 to 2.0 weight% of water-insoluble material, the method comprising the steps of: a) mixing potassium (K) chloride and sulphuric acid, thereby producing a composition comprising potassium sulphate and sulphuric acid; b) adding magnesium oxide to the composition obtained in step a), thereby neutralizing the sulphuric acid comprised in the composition obtained in step a); c) adding the composition obtained in step b) to a composition comprising nitrogen (N) and/or phosphorus (P); d) solidifying the composition obtained in step c), thereby producing a solid, particulate composition.

Potassium is an important element in agriculture, and it is always supplied to crops as a potassium salt, i.e. K+. Potassium chloride and potassium sulphate are the two main sources of potassium used as fertilizer. Potassium chloride may be found naturally and be produced from mining operations, but chloride ions are not tolerated by certain crops, so it may be preferred to use a potassium source other than potassium chloride. Potassium sulphate contains a source of sulphur (S), which is also a nutrient required by most crops, in the form of sulphate ions. Potassium sulphate does not exist naturally and has to be produced.

A known industrial method for producing potassium sulphate is called the Mannheim process. In this process, potassium chloride is reacted with sulphuric acid under high temperature to yield potassium sulphate and hydrogen chloride.

Hydrogen chloride is a gas and is evacuated from the reaction vessel to be later transformed into an aqueous solution, hydrochloric acid.

The potassium sulphate obtained by the process still contains a small amount of sulphuric acid, which is used in excess in the reaction, and this small excess needs to be neutralized before the potassium sulphate can be used for producing a fertilizer product. Generally, the composition comprising potassium sulphate and sulphuric acid has a pH of 1.5 to 2.5, measured as a 10 weight% aqueous solution. Such a low pH may not be desirable depending on the intended use of the potassium sulphate. It may be preferred that the potassium sulphate has a pH closer to 4.

Conventionally, this is done by adding a base, in particular an inorganic base, such as calcium oxide to an aqueous solution comprising the acidic potassium sulphate. Calcium oxide reacts with sulphuric acid to yield calcium sulphate and water. Calcium oxide is commercially available from a wide range of suppliers and relatively cheap. It is available as a dry powder, which makes it easy to use in an industrial plant. Calcium is a secondary nutrient that is required by many crops, so adding a source of calcium in the SOP also brought an added agronomical value to the SOP.

However, it may not be possible or economically interesting to separate the calcium sulphate obtained from the potassium sulphate. So, a solid, particulate composition produced using this potassium sulphate contains an amount of calcium sulphate, which has a low water solubility (about 2 to 3 g per liter of water at 20 °C). This is inconvenient when one is trying to produce a solid, particulate composition with an amount of water-insoluble material as low as possible and comprising potassium sulphate.

It was found out that magnesium oxide is a very interesting compound to replace calcium oxide in the neutralization step. Magnesium oxide is an alkaline compound and can react with sulphuric acid to neutralize it. When magnesium oxide reacts with sulphuric acid, magnesium sulphate is formed, and magnesium sulphate has a very good water solubility (at least 350 g per liter of water at 20 °C). Furthermore, magnesium is a nutrient required by crops, so using magnesium oxide in the potassium sulphate increases the agronomical value of the final fertilizer product.

Magnesium oxide is also easily available in large quantities, it can be obtained as a free-flowing product which facilitates its addition in the industrial process.

The exact amount of magnesium oxide added to the potassium sulphate may depend on several factors, such as the excess of sulphuric acid used in the reaction with potassium chloride, and the desired pH of the potassium sulphate after the neutralization step.

The composition comprising potassium sulphate and magnesium oxide is mixed, so that magnesium oxide can fully react with sulphuric acid.

In one embodiment, the pH of a 10 wt% aqueous solution of the composition obtained after the magnesium oxide neutralization is from 3.5 to 4.5, in particular from 3.7 to 4.2. A pH around 4 for the neutralized potassium sulphate was found to be very good for producing fertilizer products, in particular NPK fertilizer products.

In one embodiment, in step b), from 5 to 35 kg, from 5 to 30 kg, from 10 to 35 kg, or from 10 to 30 kg, or from 15 to 25 kg of magnesium oxide per ton of composition obtained in step a) is added to the composition obtained in step a).

After the neutralization step, the water content of the potassium sulphate may be reduced to allow an easier transport. This can be achieved by a number of ways known in the field, such as heating up the potassium sulphate, so that the water evaporates.

The final water content of the potassium sulphate may vary depending on the desired application of the potassium sulphate.

In one embodiment, the water content of the composition obtained in step b) is from 0.01 to 0.5 weight%, in particular from 0.05 to 0.5 weight%, more in particular from 0.05 to 0.25 weight%; even more in particular from 0.05 to 0.23 wt%.

The neutralization step may comprise a drying step, wherein the water content of the potassium sulphate is reduced to the desired level. The neutralization step and the drying step may be performed in a single apparatus, such as a neutralization drum.

In one embodiment, the water content of the composition obtained in step a) is from 0.001 to 0.5 weight%, in particular from 0.001 to 0.1 weight%.

When the potassium sulphate has the desired characteristics, such as pH, and water content, it can be added to a composition containing nitrogen and/or phosphorus. The composition is mixed until the potassium sulphate is evenly dispersed in the composition comprising N and/or P.

In one embodiment, the potassium sulphate is added to a composition containing nitrogen and phosphorus to eventually yield an NPK fertilizer product.

The composition containing nitrogen and/or phosphorus may be obtained by different methods known in the art. For example, in the fertilizer industry, a suitable method comprises the step of mixing phosphate rock with a solution comprising one or more inorganic acids selected from the group consisting of nitric acid, sulphuric acid and phosphoric acid. The strong inorganic acid dissolves the phosphate rock and transforms the phosphorus atoms present in the phosphate rock as watersoluble phosphate salts. When the solution comprises at least nitric acid, the resulting solution comprises nitrogen, from the nitric acid, and phosphorus, from the phosphate rock. The mixture obtained can be further processed to remove insoluble material, for example by filtration.

The solution obtained from the reaction of phosphate rock with one or more inorganic acid may be further reacted with ammonia to neutralize the remaining free acid. Ammonia is an interesting base to use in this process because it is transformed, during the neutralization, into ammonium ions which are a fertilizer source of nitrogen. Once applied to the soil, ammonium ions can be directly absorbed by crops as nitrogen source and they can also be transformed into nitrate ions by bacteria present in the soil. Nitrate ions are the preferred nitrogen source for crops.

Alternatively, a mixture comprising one or more acids selected from the group consisting of nitric acid, sulphuric acid, and phosphoric acid, may be prepared and neutralized with a base, such as ammonia, in particular anhydrous ammonia. Such a composition can be prepared with a very low amount of water-insoluble material if all the starting materials are of high purity, for example higher than 95 %, 96%, 97%, 98%, or 99%. In one embodiment, the composition comprising nitrogen (N) and/or phosphorus (P) used in step c) is obtained by mixing an acidic composition comprising a component selected from the group consisting of nitric acid, sulphuric acid, phosphoric acid, and mixtures thereof, with ammonia.

In one embodiment, the composition comprising nitrogen (N) and/or phosphorus (P) used in step c) is obtained by mixing an acidic composition consisting of a component selected from the group consisting of nitric acid, sulphuric acid, phosphoric acid, and mixtures thereof, with ammonia.

In one embodiment, the acid mixture consists of nitric acid, the neutralized composition only contains nitrogen as nutrient, and after adding SOP, a NKS fertilizer is obtained.

In one embodiment, the composition comprising nitrogen (N) and/or phosphorus (P) used in step c) comprises an ammonium salt and/or a phosphate salt.

In one embodiment, the composition comprising nitrogen (N) and/or phosphorus (P) used in step c) comprises 50 to 99 weight% of ammonium salts and/or phosphate salts. In one embodiment, the composition comprising nitrogen (N) and/or phosphorus (P) used in step c) comprises 50 to 99 weight% of a component selected from the group consisting of ammonium salts, phosphate salts and mixtures thereof. In one embodiment, the composition comprising nitrogen (N) and/or phosphorus (P) used in step c) comprises 50 to 99 weight%, 60 to 99 weight%, 70 to 99 weight%, 80 to 99 weight%, or 90 to 99 weight% of a component selected from the group consisting of ammonium nitrate, ammonium phosphate, ammonium sulphate and mixtures thereof.

In one embodiment, the acid mixture comprises phosphoric acid, the neutralized composition contains nitrogen and phosphorus as nutrient, and after adding SOP, a NPKS fertilizer is obtained.

In one embodiment, the composition comprising nitrogen (N) and/or phosphorus (P) used in step c) is a melt or a molten composition.

In one embodiment, the composition obtained in step b) is added to a composition comprising nitrogen (N) and/or phosphorus (P) in a weight ratio of from 5:1 to 1:5, from 3:1 to 1:5, from 2:1 to 1:5, from 5:1 to 1:3, from 3:1 to 1:3, from 2:1 to 1:3, from 5:1 to 1:2, from 3:1 to 1:2, or from 2:1 to 1:2. The weight ratio of the composition comprising potassium sulphate to the composition comprising N and/or P is adjusted depending on the desired content of the final solid particles.

In one embodiment, the acid mixture comprises sulphuric acid, the neutralized composition comprises nitrogen and sulphur, such that after adding SOP, a NKS fertilizer is obtained.

Others methods may also provide a composition comprising nitrogen and/or phosphorus. For example, it is possible to dissolve in an aqueous solution ammonium phosphate salts, such as diammonium phosphate and monoammonium phosphate.

In one embodiment, further nutrient sources may be added to the composition either before potassium sulphate, at the same time as potassium sulphate or after potassium sulphate has been added to the composition comprising nitrogen and/or phosphorus. Thus, further nutrients and micronutrients may be added during step c) or to the composition obtained in step c).

Crops require several types of nutrients: primary nutrients, nitrogen, phosphorus, and potassium; secondary nutrients, calcium, magnesium and sulphur; and micronutrients, boron manganese, molybdenum, iron, and zinc. It is common for fertilizer products to comprise several types of nutrients, such fertilizer products reduce the number of applications that the farmer needs to perform to supply all the required nutrients to its crops.

For each nutrient, a number of suitable sources are known in the field. For example, suitable sources of magnesium include magnesium sulphate, kieserite, and magnesium oxide. Suitable sources of zinc include zinc sulphate. Suitable sources of iron include iron sulphate and iron chelates, such as iron tetraethylenediaminetetraacetate, also named Fe(EDTA). A suitable source of boron is sodium borate or sodium tetraborate, i.e. borax. A suitable source of manganese is manganese sulphate.

The resulting composition comprises potassium sulphate, nitrogen and/or phosphorus. In the fertilizer industry it is common to provide fertilizer products as solid products, in particular as solid, particulate composition.

To obtain such solid, particles, the composition comprising potassium sulphate, nitrogen and/or phosphorus may be solidified. The solidification step may be performed on a number of different apparatus well known in the field, for example a drum granulator, a spherodizer, a prilling tower or a fluidized bed granulator. In one embodiment, step d) is performed in a prilling tower, a drum granulator, a spherodizer, or a fluidized bed granulator.

The solidification step may comprise additional steps, such as adjusting the water content of the composition comprising potassium sulphate, nitrogen, and/or phosphorus, for example by heating up the composition comprising potassium sulphate, nitrogen, and/or phosphorus.

In one embodiment, the solid, particulate composition obtained in step d) is a solid, particulate fertilizer composition, in particular a solid, particulate NK, PK, or NPK fertilizer composition.

NPK fertilizers can be prepared with a wide range of ratios for each element, for example, 18-4-19, 13-4-25, 15-15-15, 16-10-16, 18-5-18, or 9-5-26, wherein the first number indicates the weight% of nitrogen of the fertilizer, the second number indicates the weight% of phosphorus, expressed as P₂O₅, and the third number indicates the weight% of potassium, expressed as K₂O.

In one embodiment, the solid, particulate composition obtained in step d) comprises from 0 to 30 weight%, from 5 to 30 weight%, from 10 to 30 weight%, from 0 to 20 weight%, from 5 to 20 weight%, from 10 to 20 weight%, or from 10 to 25 weight% of nitrogen.

In one embodiment, the solid, particulate composition obtained in step d) comprises from 0 to 30 weight%, from 5 to 30 weight%, from 10 to 30 weight%, from 0 to 20 weight%, from 5 to 20 weight%, from 10 to 20 weight%, or from 10 to 25 weight%, of phosphorus, expressed as P₂O₅.

In one embodiment, the solid, particulate composition obtained in step d) comprises from 0 to 36 weight%, from 5 to 30 weight%, from 10 to 30 weight%, from 0 to 20 weight%, from 5 to 20 weight%, from 10 to 20 weight%, or from 10 to 25 weight% of potassium, expressed as K₂O.

In one embodiment, the solid, particulate composition obtained in step d) from 1 to 30 weight%, or from 1 to 20 weight% of each N, P (expressed as P₂O₅) and K (expressed as K₂O).

The resulting solid, particulate composition obtained by the method described above has a lower content of water-insoluble material than a similar product obtained by a method using potassium sulphate neutralized with calcium oxide, because it does not contain the water-insoluble calcium sulphate.

In one embodiment, the solid, particulate composition obtained in step d) comprises from 0 to 2.0 weight%, from 0.001 to 2.0 weight%, from 0.01 to 2.0 weight%, from 0 to 1.5 weight%, from 0.01 to 1.5 weight%, from 0 to 1.0 weight%, from 0 to 0.9 weight%, from 0 to 0.8 weight%, from 0 to 0.7 weight%, or from 0 to 0.6 weight% of water-insoluble material.

In one embodiment, the solid, particulate composition obtained in step d) comprises from 0 to 1.0 weight%, from 0 to 0.9 weight%, from 0 to 0.8 weight%, from 0 to 0.7 weight%, from 0 to 0.6 weight%, from 0 to 0.5 weight%, from 0 to 0.4 weight%, from 0 to 0.3 weight%, from 0 to 0.2 weight%, or from 0 to 0.1 weight% of calcium sulphate.

In one embodiment, the method further comprises the step of applying a coating composition to the solid, particulate composition obtained in step d). It is known, in particular in the fertilizer industry, to add a coating composition to solid particles to improve the properties of the particles, such as reduced moisture absorption, reduced caking tendency, reduced dust formation.

Coating composition are known in the field and are selected depending on the composition of the solid particles, and/or the required effect.

In one embodiment, the coating composition comprises an oil, in particular a vegetable oil, or a mineral oil.

In one embodiment, the coating composition comprises a wax.

In one embodiment, the coating composition comprises a glycol or a glycol ether.

In another aspect, the present disclosure provides the use of a composition comprising potassium sulphate and magnesium sulphate to produce a solid, particulate composition, in particular a solid, particulate NPK composition.

In another aspect, the present disclosure provides the use of the solid, particulate composition obtained by the method described above as a fertilizer, in particular in fertigation. The solid, particulate composition obtained by the method described above is a NK, PK, or NPK composition suitable to be used as fertilizer since it contains two or three of the primary nutrients required by crops. The composition can be prepared with a very small amount of water-insoluble material, which makes it suitable to be used in fertigation.

**Example** 1: A batch of potassium sulphate was prepared in the following conditions: 1000 kg of potassium chloride was mixed in a furnace with 380 kg of sulphuric acid at a temperature of about 570 °C. Hydrogen chloride gas was evacuated from the furnace and a composition containing potassium sulphate and sulphuric acid was obtained and directed to a neutralization drum. 1 - 3 weight % of magnesium oxide was added to the drum, and the drum was mixed for 20 min. The pH and water content of the potassium sulphate were measured by standard techniques: pH = 4 (10 weight% aqueous solution), and water content = 0.1 weight%. A 10 weight% solution of the SOP obtained was prepared, and the amount of water-insoluble material in the solution was measured: 0.20 weight% of the total weight of the SOP present in the solution.

A mixture of nitric acid, sulphuric acid and phosphoric acid was prepared with a weight ratio of 5.7/1/1.07 (nitric acid/sulphuric acid/ phosphoric acid). Ammonia was added to the mixture in 1/3.5 weight ratio (ammonia/sum of acids) and the components were mixed until an homogeneous NPS mixture was obtained. The potassium sulphate prepared above was added to the NPS composition in a 1.2/1 weight ratio (SOP/NPS composition). Secondary and micronutrients such as magnesium sulphate, zinc sulphate and/or borax may be added to the composition. The resulting melt was directed to a granulation drum to produce a solid, particulate composition with an NPK content of 13/4/25. An aqueous solution containing 10 weight% of these granules was prepared and the amount of water-insoluble particles was measured: 0.56 weight% of the total weight of the granules.

A NPK product with the same NPK content was produced with SOP wherein calcium oxide was used as neutralizing agent, and the final NPK product contained 1.1 weight% of water-insoluble particles.

### Example 2:

Following the procedure for both the SOP and the NPK granules, products with the following NPK ratios were produced: 18/5/18, and 18-4-19. The amount of water-insoluble particles in these products was 0.60 weight% for the 18/5/18 and 0.49 weight% for the 18/4/19.

Products with identical NPK ratios were produced with SOP produced with calcium oxide, and the amount of water-insoluble particles was found to be 1.6 weight% for the 18/5/18, and 1.0 weight% for the 18/4/19.

### Example 3: Potassium sulphate was prepared as in example 1.

A mixture of nitric acid, sulphuric acid and phosphoric acid was prepared with a weight ratio of 19/1/6.8 (nitric acid/sulphuric acid/ phosphoric acid). Ammonia was added to the mixture in 1/3.6 weight ratio (ammonia/sum of acids) and the components were mixed until an homogeneous NPS mixture was obtained. The potassium sulphate prepared above was added to the NPS composition in a 1/1.6 weight ratio (SOP/NPS composition). Secondary and micronutrients such as magnesium sulphate, zinc sulphate and/or borax may be added to the composition. The resulting melt is directed to a granulation drum to produce a solid, particulate composition with an NPK content of 16/10/16.

## Claims

1. A method for producing a solid, particulate composition comprising from 0 to 2.0 weight% of water-insoluble material, the method comprising the steps of:
a) mixing potassium (K) chloride and sulphuric acid, thereby producing a composition comprising potassium sulphate and sulphuric acid;
b) adding magnesium oxide to the composition obtained in step a), thereby neutralizing the sulphuric acid comprised in the composition obtained in step a);
c) adding the composition obtained in step b) to a composition comprising nitrogen (N) and/or phosphorus (P);
d) solidifying the composition obtained in step c), thereby producing a solid, particulate composition.

2. The method according to claim 1, wherein the pH of a 10 wt% aqueous solution of the composition obtained in step b) is from 3.5 to 4.5, in particular from 3.7 to 4.2.

3. The method according to claim 1 or 2, wherein, in step b), from 15 to 25 kg of magnesium oxide per ton of composition obtained in step a) is added to the composition obtained in step a).

4. The method according to any one of claims 1 to 3, wherein the water content of the composition obtained in step b) is from 0.05 to 0.5 weight%, in particular from 0.05 to 0.23 weight%.

5. The method according to any one of claims 1 to 4, wherein the solid, particulate composition obtained in step d) is a solid, particulate fertilizer composition, in particular a solid, particulate NK, PK, or NPK fertilizer composition.

6. The method according to any one of claims 1 to 5, wherein step d) is performed in a prilling tower, a drum granulator, a spherodizer, or a fluidized bed granulator.

7. The method according to any one of claims 1 to 6, wherein the composition comprising nitrogen and/or phosphorus further comprises a secondary nutrient and/or a micronutrient.

8. The method according to any one of claims 1 to 7, further comprising the step of adding a secondary nutrient and/or a micronutrient during step c); or to the composition obtained in step c).

9. The method according to any one of claims 1 to 8, wherein the composition comprising nitrogen (N) and/or phosphorus (P) used in step c) is obtained by mixing an acidic composition comprising a component selected from the group consisting of nitric acid, sulphuric acid, phosphoric acid, and mixtures thereof, with ammonia.

10. The method according to any one of claims 1 to 9, further comprising the step of applying a coating composition to the solid, particulate composition obtained in step d).

11. The use of a composition comprising potassium sulphate and magnesium sulphate to produce a solid, particulate composition, in particular a solid, particulate NPK composition.

12. The use of the solid, particulate composition obtained by the method according to any one of claims 1 to 9 as a fertilizer, in particular in fertigation.
